# EUROPÄISCHE PATENTSCHRIFT

(11) **EP 3 489 663 B1**
(45) Veröffentlichungstag und Bekanntmachung des Hinweises auf die Patenterteilung: **27.04.2022**
(21) Anmeldenummer: 18206484.0
(22) Anmeldetag: 15.11.2018
(51) Int. Cl.: G01N 21/64, G01N 33/22, G01N 31/22, G01N 21/77

(54) **HOCHSELEKTIVE UND SENSITIVE DETEKTION VON 2,4,6-TRINITROTOLUOL MITTELS FLUORESZENZVERSTÄRKUNG DURCH UV INDUZIERTE PHOTOREAKTION MIT ANIONEN**
HIGHLY SELECTIVE AND SENSITIVE DETECTION OF 2,4,6-TRINITROTOLUENE USING FLUORESCENCE ENHANCEMENT BY MEANS OF UV-INDUCED PHOTOREACTION WITH ANIONS
DÉTECTION SENSIBLE ET HAUTEMENT SÉLECTIVE DU 2,4,6-TRINITROTOLUÈNE PAR AMÉLIORATION DE LA FLUORESCENCE PAR PHOTORÉACTION AVEC DES ANIONS INDUITE PAR LES UV

(30) Priorität: 17.11.2017 DE 102017127167
(43) Veröffentlichungstag der Anmeldung: 29.05.2019
(73) Patentinhaber: Bundesrepublik Deutschland, Vertreten Durch Die Bundesministerin für Wirtschaft und Energie, Diese vertreten durch den Präsidenten der, 12205 Berlin (DE)
(72) Erfinder: RURACK, Knut, 12247 Berlin (DE); BIYIKAL, Mustafa, 12053 Berlin (DE)
(74) Vertreter: Zimmermann & Partner Patentanwälte mbB

(56) Entgegenhaltungen:
- DE-A1-102015 119 765
- US-A1- 2008 044 909
- KALATHIL K. KARTHA ET AL: "Attogram Sensing of Trinitrotoluene with a Self-Assembled Molecular Gelator", JOURNAL OF THE AMERICAN CHEMICAL SOCIETY, Bd. 134, Nr. 10, 5. März 2012 (2012-03-05) , Seiten 4834-4841, XP055576505, ISSN: 0002-7863, DOI: 10.1021/ja210728c
- XIANGCHENG SUN ET AL: "Fluorescence based explosive detection: from mechanisms to sensory materials", CHEMICAL SOCIETY REVIEWS, Bd. 44, Nr. 22, 3. September 2015 (2015-09-03), Seiten 8019-8061, XP055576478, UK ISSN: 0306-0012, DOI: 10.1039/C5CS00496A

## Beschreibung

Die Erfindung betrifft den selektiven Nachweis von 2,4,6-Trinitrotoluol (TNT), gegebenenfalls auch aus komplexen Gemischen mit anderen Nitroaromaten, in der Luft, in wässriger Lösung und auf Oberflächen.

Bei den meisten, derzeit auf dem Markt angebotenen Systemen zum Nachweis von TNT handelt es sich um Ionen-Mobilitätsspektrometer (IMS), um gaschromatographische (GC) bzw. Raman- und Infrarot- (IR) spektroskopische Techniken. Im kommerziellen Bereich spielen primär IMS- (z.B. SABRE 4000, Smiths Detection/USA) und Raman-Geräte (z.B. FirstDefender RM, Ahura /USA) eine Rolle. Zudem sind einige chemische Methoden wie Chemilumineszenz-Assays oder molekular wechselwirkende Sensoren, wie die fluoreszierenden konjugierten Polymere, bekannt als "amplifying fluorescent polymers" (AFPs), beschrieben worden. Die Fluoreszenz dieser AFPs wird in Gegenwart von TNT und anderen Nitroaromaten abgeschwächt.

X. Sun et al.: "Fluorescence based explosive detection: from mechanisms to sensory materials", Chem. Soc. Rev., 2015, 44, 8019-8061, gibt eine Übersicht über Ansätze zum fluoreszenzbasierten Nachweis von Explosivstoffen.

Der Einsatz von fluoreszierenden konjugierten Polymeren zur Detektion von Explosivstoffen mittels Fluoreszenzlöschung ist bekannt. Die Mehrzahl entsprechender Detektionsmethoden für TNT basiert auf der unspezifischen Wechselwirkung der AFPs und (nicht) fluoreszierender Farbstoffe mit Stoffen, die ein hohes Oxidationspotential aufweisen.

Kolorimetrische Nachweisverfahren von TNT sowie von Tri- und Dinitroaromaten weisen eine geringe Selektivität und Sensitivität gegenüber TNT auf.

Vor diesem Hintergrund wird ein Verfahren gemäß Anspruch 1 bereitgestellt. Weitere Aspekte, Einzelheiten, Vorteile und Merkmale der vorliegenden Erfindung ergeben sich aus den Unteransprüchen und der Beschreibung.

Gemäß einer ersten Ausführungsform wird ein Verfahren zum Nachweis eines

Analyten umfassend Trinitrotoluol gemäß Anspruch 1 vorgeschlagen. Das vorgeschlagene Verfahren umfasst die folgenden Schritte:
- Bereitstellen einer Indikatorlösung, umfassend ein Kation, ein Anion und ein polares Lösungsmittel, insbesondere ein polares aprotisches Lösungsmittel;
- Wechselwirken der Indikatorlösung mit dem Analyten;
- Ausbilden eines Komplexes, bevorzugt photokatalytisch, durch Belichten der mit dem Analyten in Wechselwirkung getretenen Indikatorlösung. Der Komplex umfasst den Analyten und das Anion;
- fluoreszenzoptisches Nachweisen des ausgebildeten Komplexes; und
- optional, Zuordnen eines beim Nachweisen erfassten Fluoreszenzsignals zu einer Menge oder Konzentration des Analyten.

Vorteile dieser Ausführungsform ergeben sich mit der hohen Empfindlichkeit fluoreszenzoptischer Messverfahren und mit der diskreten Emissionsbande des gebildeten Komplexes, die den spezifischen Nachweis von TNT erlaubt. Dabei kann das fluoreszenzoptische Nachweisen qualitativ und/oder zumindest semiquantitativ erfolgen. Insbesondere kann das Fluoreszenzsignal eine Fluoreszenzintensität, eine relative Fluoreszenzintensität oder eine Fluoreszenzquantenausbeute umfassen. Der Analyt kann vorteilhaft gelöst in einer Lösung vorliegen, beispielsweise gelöst in einem organischen Lösungsmittel vorliegen, sodass das Wechselwirken ein Vermischen von Indikatorlösung und der den Analyten enthaltenden Lösung umfasst.

Das Kation ist ausgewählt unter einem:
Tetraalkylammonium-Kation; einem Trialkylammonium-Kation; und einem Dialkylammonium- Kation.

Vorteilhaft weisen diese Kationen eine relativ geringe Ladungsdichte auf, um nicht zu stark mit den Anionen elektrostatisch wechselwirken zu können, sowie organische Reste am zentralen Ammonium-Stickstoff, um löslichkeitsvermittelnd zu wirken.

Das Anion ist ausgewählt unter einem:
Acetat-Anion; einem Propionat-Anion; einem Butyrat-Anion; einem Carboxylat-Anion mit einer Anzahl an Kohlenstoffatomen von 4 bis 15; einem Phosphat-Anion; einem Hydrogenphosphat-Anion; einem Dihydrogenphosphat-Anion; einem Benzoat-Anion; einem Phenylacetat-Anion; einem Phenolat-Anion; einem Cyanid-Anion einem Fluorid-Anion, einem Carbonat-Anion; einem Hydrogencarbonat-Anion; und einem Formiat-Anion.

Vorteilhaft sind diese Anionen, weil sie hinreichend nukleophil, aber trotzdem nur schwach basisch sind. Zu stark basische Anionen würden die Methylgruppe von TNT deprotonieren.

Die Indikatorlösung umfasst ein polares, nicht fluoreszierendes Lösungsmittel.

Vorteile dieser Ausführungsform ergeben sich mit der ungestörten Fluoreszenzmessung. Die Polarität des Lösungsmittels befördert die Ausbildung der hier analytisch genutzten Komplexe.

Gemäß einer weiteren Ausführungsform ist das Tetraalkylammonium-Kation ausgewählt unter einem Tetrabutylammonium-, Tetrahexylammonium-, und einem Tetraoctylammonium-Kation, und das Anion ist ausgewählt unter einem Acetatanion, einem Benzoat-Anion oder einem Phosphat-Anion.

Vorteile dieser Ausführungsform werden nachfolgend noch erläutert. Gerade die Gegenwart eines Acetatanions erwies sich als vorteilhaft für die Ausbildung der fluoreszenzoptisch erfassten Komplexe.

Gemäß einer weiteren Ausführungsform ist das polare, nicht fluoreszierende Lösungsmittel ausgewählt unter: Diethylformamid, Dipropylformamid, Dimethylformamid, insbesondere N, N-Diethylformamid, N, N-Dipropylformamid, N, N-Dimethylformamid, Dibutylformamid, 1-Formylpyrrolidin, Dimethylsulfoxid, Diethylsulfoxid, Dipropylsulfoxid, Dibutylsulfoxid, Tetrahydrothiophen 1-oxid, Acetamid, Dimethylacetamid, beispielsweise N,N-Dimethylacetamid, N,N'-Diformyl-N,N'-dimethylethylendiamin (CAS.: 6632-41-3), N,N-Diethylacetamid, 1,4-Piperazindicarboxaldehyd (Cas.: 4164-39-0) bzw. Diformamid-Derivaten, 1,3,5-Triazin-1,3,5 (2*H*,4*H*,6*H*)-tricarboxaldehyd bzw. Triformamid-Derivaten, einem Polyamid z.B. Nylon 6, einem Polyvinylpyrrolidon, einem Polyformamid, einem Polyacrylamid, einem Poly(N,N-dimethylacrylamid) und einem Polyethylenglykol. Des Weiteren sind Polyethylenglykole wie z.B. PEG 10.000 (Schmelzpunkt bei 62-65°C) und PEG 2.050 bei (Schmelzpunkt bei 52-54°C) oder PEG 35.000 (Schmelzpunkt 64-66°C) geeignet, die in reiner Form oder als Mischungen mit Formamiden oder Acetamiden eingesetzt werden können. Besonders bevorzugt können Mischungen der vorstehend benannten flüssigen organischen Lösungsmittel mit makromolekularen Verbindungen, wie Polyvinylpyrrolidon (z.B. Mn=10.000), Polyacrylamiden (z.B. Mn=150.000), Poly(N,N-dimethylacrylamid) (z.B. Mn=10.000), Polyformamiden (z.B. Poly(N-methyl-N-vinylformamid), Poly(N,N-divinylformamid), Poly(N-methyl-N-allylformamid), Poly(N,N-diallylformamid, Poly(N-methyl-N-homoallylformamid, Poly(N,N-dihomoallylformamid) (z.B. Mn=2.000, 10.000, 20.000) und Polyethylenglykolen (z.B. Mn=2.050, 10.000, 35.000) als nicht fluoreszierendes Lösungsmittel bzw. Trägersubstanz zur Ausbildung der fluoreszierenden Komplexe dienen. Dabei sind die vorstehend angegebenen Molmassen nur beispielhaft genannt.

Vorteilhafterweise liefert die Kombination des Lösungsmittels Diethylformamid (DEF), insbesondere N,N-Diethylformamid, für das Tetraoctylammonium-Kation und für das Acetatanion - also im Falle der Verwendung von Tetraoctylammoniumacetat (TOAA) als Salz, welches in DEF gelöst wird, die höchste Fluoreszenz des TNT-Acetat- Komplexes nach einer UV-Bestrahlung. Das Lösungsmittel Dipropylformamid, insbesondere das Lösungsmittel N,N-Dipropylformamid, liefert in Kombination mit ebendiesen Ionen, also in Gegenwart des TOAA, den zweithöchsten Wert für die Fluoreszenzintensität des TNT-Komplexes nach einer UV-Bestrahlung. Weitere Lösungsmittel wie Dimethylformamid, Dibutylformamid, insbesondere N,N-Dimethylformamid, N,N-Dibutylformamid, Dimethylsulfoxid und Acetamid können auch für den Nachweis von TNT mit TOAA eingesetzt werden. Jedoch sind die Fluoreszenzintensitäten der gebildeten Komplexe etwa 40-60% geringer als beim Einsatz von DEF als Lösungsmittel. Das wird auch durch experimentell erzielte Ergebnisse belegt, die in **Tabelle 1** zusammengefasst sind. Vorteilhaft erlaubt der Einsatz von Di-, Tri- und Polyformamiden sowie Polyethylenglykolen, die Flüchtigkeit des Lösungsmittels zu senken. Das ermöglicht eine höhere Präzision, da sich die Konzentration der Reaktionsansätze während der Messung nicht verändert. Die Lösungsmittel Diformamid-Derivate (links) und Triformamid-Derivate (rechts) sind im nachfolgenden Formelbild gezeigt:

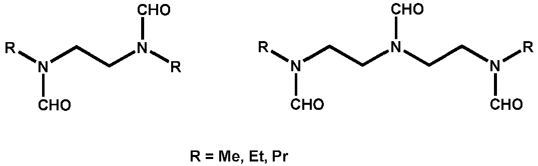

Selbst wenn bestimmte Polyamide, Polyvinylpyrrolidon, Polyacrylamide, Polyformamide und Polyethylenglykole nicht unbedingt als flüssige Lösungsmittel im klassischen Sinne aufgefasst werden könnten, sondern eher als makromolekulare Trägermaterialien mit niedrigem Schmelzpunkt, so stehen das Anion, das Kation und der potentiell anwesende Analyt (TNT) doch in unmittelbarem Kontakt damit. In Bezug zum betreffenden Lösungsmittel bzw. Trägermaterial liegt das Anion, das Kation und der potentiell anwesende Analyt - gemäß den vorgeschlagenen Ausführungsformen - molekular dispergiert, gelöst oder adsorbiert vor. Das Salz TOAA ist nach Literaturangaben ein weißer Feststoff. In unserem Fall wurde TOAA jedoch als eine hochviskose Flüssigkeit erhalten. Der Grund dafür ist die stark hygroskopische Eigenschaft von TOAA. Selbst unter Vakuum oder nach Lagerung über Calciumhydrid als Trockenmittel konnte das TOAA nicht verfestigt werden bzw. das (Kristall-)Wasser nicht entzogen werden. Diese Eigenschaft ermöglicht es überraschend, TOAA als Lösungsmittel für makromolekulare Trägermaterialien (Polymere oder feste (Form)amide, wie Di- und Triformamide) zu verwenden. Dabei ist TOAA in einem beliebigen Verhältnis mit diesen festen Trägermaterialien mischbar. Di- und Triformamide sind Feststoffe. Wenn das Salz TOAA als Flüssigkeit vorliegt, lassen sich diese in Gegenwart von TOAA vorteilhaft auch verflüssigen. Davon ausgehend wird im Fall des Vorliegens von TOAA als Flüssigkeit gemäß einer Ausführungsform vorgeschlagen, Mischungen von Di- und Triformamiden mit TOAA als eine Sensorschicht für den Nachweis des Analyten einzusetzen. Die Sensorschicht kann in einem Mikrofluidiksystem zur fluoreszenzoptischen Bestimmung von TNT verwendet werden.

Vorteilhaft verhindern die oben genannten makromolekularen Substanzen eine Auskristallisation am Sensor und erlauben so einen reproduzierbaren Nachweis des Analyten. Besonders bevorzugt werden Kombinationen (hier auch als Mischungen bezeichnet) eines der genannten organischen Lösungsmittel mit einem oder mehreren der genannten makromolekularen Trägermaterialien. Kombinationen der Lösungsmittel und Trägermaterialien sind in **Tabelle 3** zusammengestellt und deren vorteilhafte Eigenschaften bezeichnet. Die Mischungen weisen vorteilhaft eine höhere Viskosität als die reinen organischen Lösungsmittel auf und sind deshalb weniger fließfähig. Während die reinen Lösungsmittel oder deren Mischungen den Nachweis des Analyten in flüssigen Proben oder Probenextrakten ohne weiteres erlauben, begünstigt der Zusatz der bezeichneten makromolekularen Komponenten die Anwendung des vorgeschlagenen Detektionsprinzips auch für gasförmig vorliegenden Analyten. Mikrofluidische Systeme, beispielsweise chipbasierte Mikrofluidik-Systeme für den einmaligen Gebrauch, können zum Nachweis des Analyten in der Gasphase, sowie in flüssigen Extrakten aus Boden- oder Wasserproben dienen. Besonders vorteilhaft ist die verminderte Fließfähigkeit des zur Ausbildung der fluoreszierenden Analyt-Komplexe genutzten Materials: Beispielsweise kann eine Kapillare eines Mikrofluidik-Systems mit der Mischung beschichtet werden, sodass der Nachweis des Analyten auch beim Durchleiten erhitzter Luft, die potentiell den Analyten enthält, gelingt. Die Lösungsmittel/Träger-Mischung läuft während der Handhabung des Mikrofluidik-Systems nicht aus der Kapillare aus, die ausgebildete Fluoreszenz bleibt ortsfest fixiert und ein sonst auftretender scheinbarer Intensitätsverlust kann zuverlässig verhindert werden. Ein weiterer Vorteil der in Tabelle 3 beschriebenen Mischungen ist die Verminderung des Dampfdruckes. Vorteilhaft können zum Nachweis des Analyten vorbereitete Mikrofluidik-Systeme auf Vorrat gefertigt und gelagert werden.

Das photokatalytisch induzierte Ausbilden des Komplexes umfasst ein Exponieren bzw. Belichten der mit dem Analyten in Wechselwirkung getretenen bzw. in Kontakt gebrachten Indikatorlösung in einem Wellenlängenbereich von 255-300 nm.

Vorteilhafterweise liegt dieser Wellenlängenbereich außerhalb der Cut-off-Wellenlänge der meisten hier benannten Lösungsmittel, sodass die UV-Strahlung vom Lösungsmittel nicht absorbiert wird und die Photoreaktion stattfindet. Mit Diethylformamid (DEF), insbesondere N,N-Diethylformamid, ist die Photokatalyse bei 260nm noch möglich, aber bei 255nm nimmt die Reaktionsgeschwindigkeit stark ab. Das wird auch durch experimentell erzielte Ergebnisse belegt, die in **Tabelle 2** zusammengefasst sind. Bei Wellenlängen über 300nm nimmt die Reaktionsgeschwindigkeit ebenfalls ab, weil der Komplex in diesem Wellenlängenbereich nicht photostabil ist.

Die Fluoreszenzintensität erreicht ihr Maximum innerhalb von 5 Minuten, die Absorptionsbande (Amax = 426 nm) nach 25 min unter UV-Bestrahlung. Selbstredend ist diese Zeit von der verwendeten Strahlungsquelle abhängig, in diesem Fall vom hier eingesetzten Fluoreszenzspektrometer. Sie kann also z.B. bei Laserbestrahlung, auch deutlich kürzer sein, sodass TNT auch innerhalb von 10 Sekunden detektiert werden kann.

Gemäß einer weiteren Ausführungsform umfasst das fluoreszenzoptische Nachweisen ein Anregen einer Fluoreszenz des ausgebildeten Komplexes bei einer Anregungswellenlänge in einem Bereich von 400nm bis 500nm und ein Erfassen eines Betrags einer Fluoreszenz in einem Bereich von 550nm bis 700nm. Insbesondere erfolgt das Anregen im Bereich von 400-450nm, während die Emissionsmessung im Bereich von 550-700nm erfolgt.

Vorteilhafterweise absorbiert beispielsweise TNT, bzw. dessen nach Exposition gegenüber UV-Strahlung einer Wellenlänge von 275nm Licht ausgebildeter Komplex im bezeichneten Bereich. Die ausgeprägteste Fluoreszenz zeigt der Komplex im bezeichneten Wellenlängenbereich von 550-700nm.

Gemäß einer weiteren Ausführungsform umfasst der erfasste Betrag der Fluoreszenz eine Fluoreszenzintensität und/oder eine Fluoreszenzquantenausbeute.

Vorteilhaft sind diese unter standardisierten Messbedingungen erfassten Größen geeignet für den qualitativen und insbesondere den quantitativen, zumindest den semiquantitativen Nachweis von TNT.

Gemäß einer weiteren Ausführungsform wird der erfasste Betrag der Fluoreszenz einer bekannten Menge oder Konzentration des Analyten zugeordnet, sodass eine Kalibrierung des Verfahrens erfolgt. Alternativ wird der erfasste Betrag der Fluoreszenz auf eine bekannte Menge oder Konzentration des Analyten, beispielsweise in einer organischen Lösung, zurückgeführt, sodass eine zumindest semiquantitative Bestimmung des Analyten in einer Probe mit einer zunächst unbekannten Konzentration des Analyten erfolgt. Hierbei ist die organische Lösung durch eine Extraktion der Probe gewonnen. Insbesondere kann die organische Lösung durch Ausschütteln einer Wasserprobe mit einem organischen Lösungsmittel gewonnen sein. Ebenso kann die organische Lösung durch ein Überführen eines festen Rückstandes in ein organisches Lösungsmittel, beispielsweise von einer hydrophoben Oberfläche, gewonnen sein. Aus der Rückstandsanalyse sind dem Analytiker einschlägige Methoden der Probenextraktion vertraut.

Vorteilhafterweise ist das Messverfahren bei geeigneter Kalibrierung zum hochgenauen quantitativen Nachweis der Analyten geeignet.

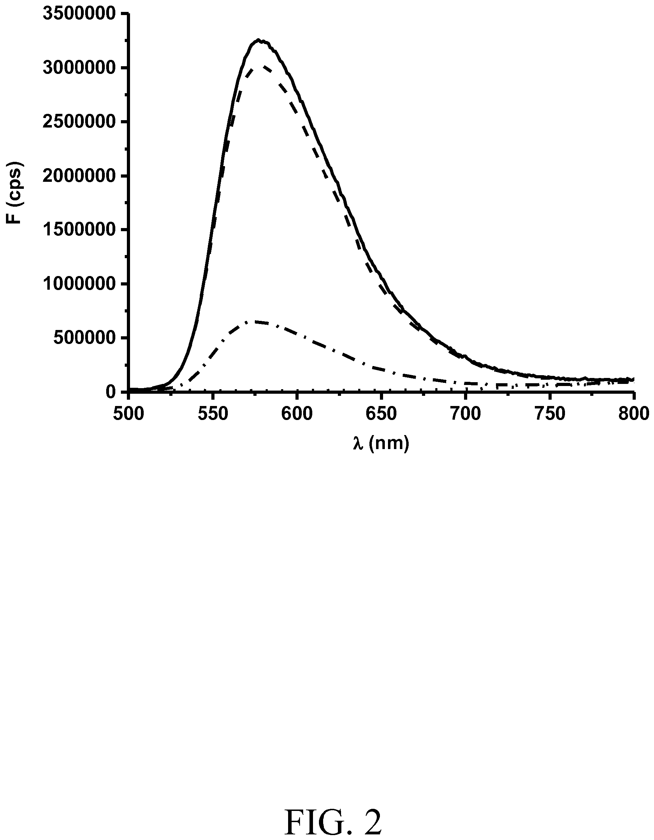

Gemäß einer weiteren Ausführungsform liegt eine Konzentration des mit dem Analyten den Komplex ausbildenden Anions in der Indikatorlösung zwischen 20 und 220mM, insbesondere zwischen 50-100 mM. Das ist die Konzentration von TOAA in DEF, also in der Indikatorlösung. Zum Nachweis des Analyten TNT wird dieser in einem organischen Lösungsmittel gelöst (siehe unten) oder als Feststoff zugegeben, was die finale Konzentration von TOAA in der zu messenden Lösung nicht deutlich ändert. Wird der Analyt TNT z.B. mittels 2 µL Chloroform (siehe unten) zugegeben, ändert sich die Konzentration der Indikatorlösung (Volumen = 100 µL, c=55 mM) nur geringfügig um 1,1 mM. Figur 2 zeigt die relative Fluoreszenzintensität (I/I₀) bei 577 nm mit TNT oder möglichen kreuzreagierenden Substanzen (in 2 µL Chloroform, c = 0,22 µM) in einer TOAA/DEF Lösung (100 µL, 55 mM).

Vorteilhafterweise beträgt eine bevorzugte Konzentration von TOAA in Diethylfomamid (DEF) 55 mM. Die Lösung von TOAA in DEF ist die hier beschriebene Indikatorlösung. Bei Reduzierung der TOAA-Konzentration auf 22 mM nimmt die Fluoreszenzintensität des entsprechenden Komplexes um 32% ab. Wird hingegen die Konzentration des TOAA auf 110 mM erhöht, so nimmt die Fluoreszenzintensität des Komplexes nur um 5% ab. Daher liegt ein idealer TOAA-Konzentrationsbereich in DEF im Bereich von 50-100 mM. Hierbei werden nach einem praktischen Ausführungsbeispiel 100 µL der Indikatorlösung eingesetzt, wobei die Menge der TNT enthaltenden Lösung 1 µL beträgt.

Gemäß einer beispielhaften Ausführungsform enthält die Indikatorlösung weiterhin eine bekannte Konzentration einer Bezugssubstanz zur internen Referenzierung. Eine Referenzierung kann aber ebenso erfolgen, indem ein geeigneter Farbstoff in einem geeigneten Lösungsmittel, das nicht unbedingt mit dem Lösungsmittel im TNT-Messkanal identisch sein muss, oder in einer entsprechenden Matrix unter den gleichen optischen Messbedingungen ein Fluoreszenzsignal liefert. Die Konzentration dieser Bezugssubstanz wird typischerweise dann so eingestellt, dass die Intensität des Fluoreszenzsignals der Referenz ungefähr in der Mitte des dynamischen Bereichs des Messkanals liegt. Als Bezugssubstanz sind geeignet alle Farbstoffe, die im Bereich 400-500 nm angeregt werden können und im Bereich 550-700 nm fluoreszieren, also z.B. sehr viele Coumarin-, Rhodamin-, Fluorescein-, Pyrromethen-, Styryl- und Cyanin-Farbstoffe, z.B. Coumarine 6, 7, 153, 334 (Coumarin-Laserfarbstoffe), DASBTI (Styryl-Laserfarbstoff), DOCI, DMETCI (Cyanin-Laserfarbstoffe), Fluorescein 27 (Fluorescein-Laserfarbstoff), Pyrromethene 567, 580, 597 (Pyrromethen-Laserfarbstoffe) oder Rhodamin 19, 110, 6G (Rhodamin-Laserfarbstoffe).

Vorteilhaft ermöglicht das eine kontinuierliche Überprüfung aktuell vorgenommener Messungen.

Gemäß einer weiteren Ausführungsform geht dem Schritt "Wechselwirken" ein Anreichern des Analyten aus einer Probe an einem hydrophoben Trägermaterial voraus. Beispielsweise kann ein Fluid, wie Luft oder Wasser durch oder auf ein hydrophobes Material geleitet werden, um den Analyten auf dem Trägermaterial anzureichern. Die Anreicherung findet bei Raumtemperatur statt. Das mit dem Analyten angereicherte Trägermaterial kann entweder mit der Indikatorlösung versetzt (Einsatz als Teststreifen) oder in eine Messkammer gespült/sublimiert (Mikrofluidik-System) werden. Die Empfindlichkeit der Messung nimmt mit steigender Wechselwirkungszeit zu. Ebenso kann der auf dem hydrophoben Trägermaterial angereicherte Rückstand von dem Trägermaterial in ein bekanntes Volumen eines Lösungsmittels, beispielsweise eines organischen Lösungsmittels, überführt werden. Hierdurch wird eine den Analyten enthaltende organische Lösung gebildet. Ausgehend von der bekannten Menge des Extraktes und der jener zu Grund liegenden Probenmenge (Luftvolumen, Wasservolumen, Masse der Bodenprobe) kann auf die ursprüngliche Konzentration in der Probe (Luft, Wasser, Boden) rückgerechnet werden.

Vorteilhaft kann die Wechselwirkungszeit der miteinander wechselwirkenden, z.B. in Kontakt gebrachten oder vermischten, Indikatorlösung und Analyt je nach Anwendungsgebiet nur wenige Sekunden betragen, vorzugsweise für Anwendungen im militärischen Bereich und im Bereich Sicherheit. Alternativ kann sie mehrere Stunden, z.B. im Bereich der Umweltanalytik, betragen. Wird aber eine den Analyten mutmaßlich enthaltende Luft direkt in die Indikatorlösung geleitet, so ist der Einsatz von einem Trägermaterial nicht erforderlich. Der Einsatz von sauren oder neutralen TNT-Proben in Wasser und in organischen Lösungsmitteln ist auch möglich. Acetat/Essigsäure-Mischungen werden als Puffer eingesetzt. Daher kann auch ein Überschuss an TOAA bei sauren Proben hilfreich sein. Der pH-Wert der TOAA/DEF-Indikatorlösung (220 mM) liegt zwischen pH 7-8. Der pH-Wert des reinen Lösungsmittels DEF liegt im Bereich pH 6-7.

Gemäß einer weiteren Ausführungsform ist das hydrophobe Trägermaterial ausgewählt unter Polybenzylmethacrylat, Polystyrol oder einem anderen hydrophoben Material, das vorzugsweise kein Wasser aufnimmt. Dabei ist es unerheblich, ob das betreffende hydrophobe Material mit oder ohne Quervernetzer eingesetzt wird. Gemäß dieser Ausführungsform ist auch der Einsatz von hydrophobisierter Cellulose bzw. von Silicamaterialien, beispielsweise einem hydrophoben chromatographischen Trägermaterial wie C18Si, C12Si, sowie von Teflon möglich.

Gemäß einer weiteren Ausführungsform ist der den Analyten und das Anion umfassende Komplex ein anionischer Sigma-Komplex.

Gemäß einer weiteren Ausführungsform wird die Verwendung von UV-Licht zur katalytischen Ausbildung eines Komplexes nitroaromatischer Explosivstoffe mit einem Anion vorgeschlagen, der zum qualitativen und/oder quantitativen Nachweis der nitroaromatischen Explosivstoffe genutzt wird. Der betreffende Komplex umfasst TNT und ein Anion, das ausgewählt ist unter einem Acetat-, einem Benzoat- und einem Phosphatanion.

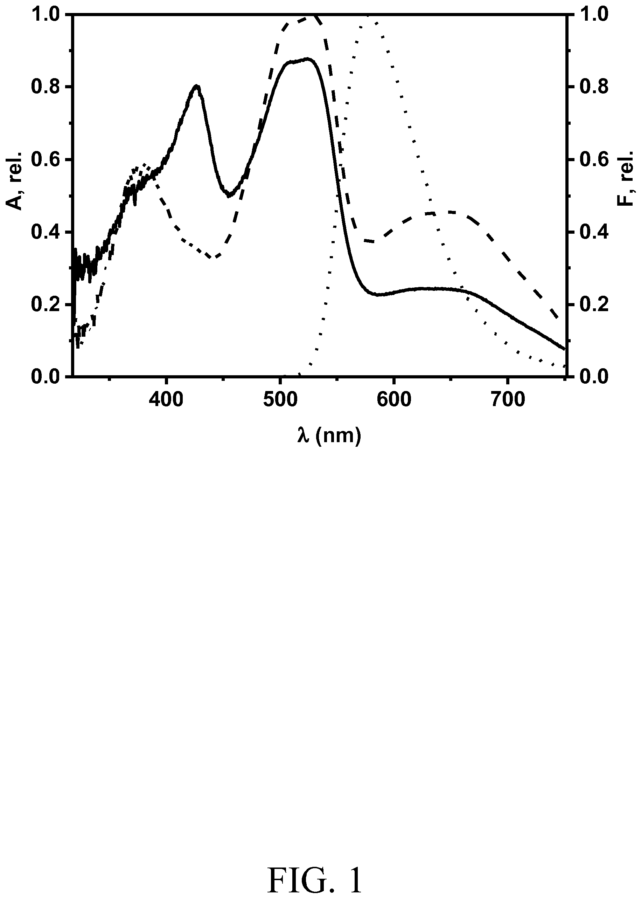

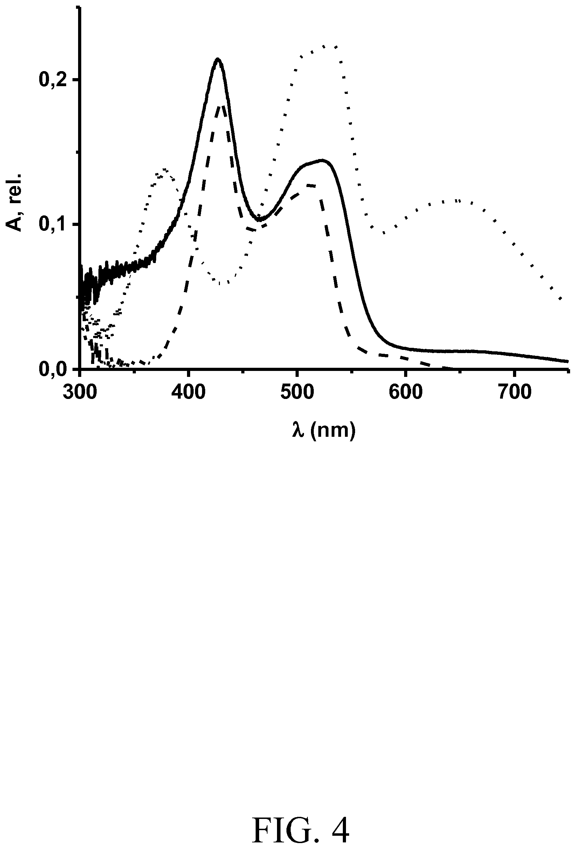

Die photokatalytische Umsetzung von TNT mit Anionen wurde bis heute nicht angewendet und ist daher neu. TNT reagiert mit Aminen und Anionen bzw. mit Nukleophilen auch ohne UV-Bestrahlung. Dabei werden jedoch stark Licht absorbierende Komplexe gebildet, die nicht oder nur sehr schwach fluoreszieren. Häufig eingesetzte Nukleophile sind Hydroxid-Ionen und Amine. Die in unserem Fall ausgewählten Anionen, vorzugsweise Acetat-Anionen, zeigen in Kombination mit dem Tetraoctylammonium-Gegenion, das beim TNT-Nachweis bisher noch nicht eingesetzt wurde, bei der Reaktion mit TNT überraschend eine stark ausgeprägte Fluoreszenzzunahme. Der Grund für die starke Fluoreszenzzunahme ist vermutlich auch, dass die hier eingesetzten Anionen aufgrund ihrer geringen Basizität die Methylgruppe von TNT nicht so schnell deprotonieren können, wie die Hydroxid-Anionen oder Amine, was zur Bildung von stark absorbierenden Spezies führt, die auch nicht mehr zum fluoreszierenden Komplex reagieren können. Hydroxide und Amine tragen keine elektronenziehenden Gruppen. Ein möglicher bzw. weiterer Grund für die Bildung von nichtfluoreszierenden Komplexen ist die Bildung eines starken Dipols. Ein Acetat trägt dagegen eine Carbonylgruppe, die die Bildung eines starken Dipols im Komplex verhindert und daher den lichtinduzierten Ladungstransport im Komplex ermöglicht. Überraschend entsteht nach der UV-Bestrahlung eine fluoreszierende Spezies (vgl. Fig. 1). Wie am Absorptionsspektrum in Fig. 1 zu erkennen ist (Ordinate A: Absorption), entsteht nach der UV-Bestrahlung eine neue Spezies (anionischer Sigma-Komplex) mit einem Absorptionsmaximum bei 425nm. Das Absorptionsspektrum in Fig. 4 zeigt, dass bei der Reaktion von TOAA mit TNT (mit UV-Bestrahlung) oder TNB (ohne UV-Bestrahlung) dieselbe fluoreszierende Spezies entsteht. Die Reaktion von TNB zu anionischen Sigma-Komplexen (auch ohne UV-Strahlung) ist bekannt: J.Org. Chem. 1980, 45 471-475; Angew. Chem. Int. Ed. 2007, 46, 1995-1998. Der direkte Nachweis, dass es sich hierbei um einen (anionischen) Sigma-Komplex handelt ist jedoch extrem schwierig zu führen. Somit wird ausgehend von den vorliegenden Hinweisen davon ausgegangen, dass die hier beobachteten, stark fluoreszierenden Komplexe, anionische Sigma-Komplexe sind. Hierbei wird unter einem Sigma-Komplex das Produkt verstanden, das durch Anlagerung einer elektrophilen oder nukleophilen Gruppe oder eines Radikals an einen Ringkohlenstoff einer aromatischen Spezies unter Entstehung einer neuen Sigma-Bindung erzeugt wird. TNB bildet auch ohne UV-Licht fluoreszierende anionische Sigma Komplexe.

Gemäß einer weiteren Ausführungsform wird die Verwendung eines Komplexes, insbesondere eines anionischen Sigma-Komplexes, umfassend TNT und eines Anions zum fluoreszenzoptischen Nachweis oder zur fluoreszenzoptischen Quantifizierung von TNT in einer Probe, insbesondere in einer Umweltprobe vorgeschlagen. Unter einer Umweltprobe wird eine der Umwelt entnommene Probe, insbesondere eine einem Boden, einer Luft oder einem Wasser entnommene Probe verstanden.

Eine photokatalytische Umsetzung von TNT mit Anionen zu einem fluoreszierenden Komplex, insbesondere zu einem fluoreszierenden anionischen Sigma-Komplex, wurde bisher nicht beschrieben. Die photokatalytische Umsetzung zu einem Komplex, insbesondere zu einem anionischen Sigma-Komplex erscheint entscheidend für die Selektivität und Sensitivität des erfindungsgemäß vorgeschlagenen Verfahrens unter Verwendung der beschriebenen Indikatorlösung. TNT reagiert photokatalytisch mit den Anionen, vorzugsweise mit TOAA, zu einem stark fluoreszierenden Komplex, dessen Detektion erfindungsgemäß zum Nachweis von TNT dient. Somit werden vorliegend fluoreszenzoptisch anionische Sigma-Komplexe des TNT nachgewiesen.

Gemäß einer weiteren Ausführungsform der vorgeschlagenen Verwendung ist das eingesetzte Anion ausgewählt unter einem Acetat-, einem Benzoat- und einem Phosphatanion. Das Anion kann aber ebenso ausgewählt sein unter einem Propionat-; einem Butyrat-; einem Carboxylat-Anion mit einer Anzahl an Kohlenstoffatomen von 4 bis 15; einem Hydrogenphosphat-; einem Dihydrogenphosphat-; einem Benzoat-; einem Phenolat-; einem Phenylacetat-; einem Cyanid-, einem Fluorid-, einem Carbonat-, einem Hydrogencarbonat- und einem Formiat-Anion. Tetraoctylammoniumcarbonat, Tetraoctylammoniumhydrogencarbonat und Tetraoctylammoniumformat können auch mit TNT reagieren. Das korrespondierende Kation ist vorteilhaft ausgewählt unter einem Tetraalkylammonium-; einem Trialkylammonium- und einem Dialkylammonium-Kation.

Die photokatalytische Ausbildung des fluoreszierenden Komplexes von TNT war bisher nicht bekannt. Als Nukleophile wurden bisher Amine und starke Nukleophile wie Hydroxid-Anionen eingesetzt, die so ausgebildeten Komplexe wiesen jedoch nur eine starke Absorption auf und kamen somit für die Quantifizierung von TNT nicht in Betracht. Die erfindungsgemäß eingesetzten Anionen sind dagegen schwache Basen, die erst durch UV-Bestrahlung mit TNT fluoreszierende Verbindungen bilden. Ungeeignet erscheinen hingegen schwach koordinierende Anionen, wie Chlorid, Bromid, Iodid, Perchlorat, Phosphorhexafluorid, Triflat, Hydrogensulfat, Sulfat, Nitrat, etc.

Gemäß einer weiteren Ausführungsform wird ein Sensor gemäß Anspruch 13, umfassend eine Sensorschicht zum optischen Nachweis von TNT mittels Fluoreszenz vorgeschlagen. Die Sensorschicht ist auf einem Substrat angeordnet. Typischerweise liegt das TNT in einem Fluid vor, wobei das Fluid entweder ein Gas oder eine Flüssigkeit ist, das/die zur Extraktion des TNT aus einer Umweltprobe genutzt wurde. Das Gas kann Luft oder ein Inertgas sein, die Flüssigkeit kann beispielsweise ein flüssiger Extrakt aus einer den Analyten TNT mutmaßlich enthaltenden Umweltprobe sein. Die Sensorschicht umfasst die oben beschriebene Indikatorlösung, also zumindest eines der oben benannten Kationen, zumindest eines der oben benannten Anionen und zumindest eines der oben benannten polaren Lösungsmittel. Typischerweise ist das polare Lösungsmittel nicht fluoreszierend bei der für den fluoreszenzoptischen Nachweis des oben beschriebenen TNT-Komplexes gewählten Wellenlänge bzw. einem dafür genutzten Wellenlängenbereich.

Gemäß bevorzugten Ausführungsformen umfasst die Sensorschicht eine Mischung von Lösungsmitteln bzw. Trägersubstanzen unterschiedlicher Flüchtigkeit (Gasdruck), wobei die Mischung so hergestellt ist, dass die Komponente mit der geringsten Flüchtigkeit den höchsten Masseanteil an der Mischung hat. Typische Massenanteile liegen im Bereich von 10:1 bis 1:1. Beispielsweise können Massenanteile der Mischung der Verbindung mit der geringeren Flüchtigkeit zu der Verbindung mit der höheren Flüchtigkeit 10:1, 9:1, 8:1, 7:1, 6:1, 5:1, 4:1, 3:1, 2:1, 1:1 oder ein dazwischenliegendes Zahlenverhältnis haben. Beispielsweise kann deren Masseverhältnis 19:2, 17:2, 15:2, 13:2, 11:2, 9:2, 7:2, 5:2 oder 3:2 sein. Vorteilhaft lässt sich so eine Viskosität der Sensorschicht einstellen, die eine reproduzierbare Messung und ortsfeste Fixierung des Fluoreszenzsignals bei der jeweiligen Sensortemperatur oder der Temperatur eines erhitzten Gas- oder Luftstromes, welcher den Analyten trägt, sichert. Im Falle der Verwendung einer Mischung von bei Raumtemperatur (20°C) als Feststoff vorliegenden Lösungsmitteln (Trägersubstanzen) soll die die AmidGruppe tragende Verbindung den höchsten Anteil an der Mischung haben. Typische Mischungsverhältnisse (Massenanteile) betragen 5:1 bis 2:1, beispielsweise 5:1, 4:1, 3:1, 2:1 oder dazwischenliegende Verhältnisse, z.B.: 9:2, 7:2, 5:2 oder 3:2. Wenn die Indikatorlösung bzw. die Sensorschicht ein bei Raumtemperatur flüssig vorliegendes organisches Lösungsmittel enthält, kann das Substrat, auf dem die Sensorschicht aufgebracht ist, gekühlt werden. Wenn die Sensorschicht jedoch überwiegend nicht-flüchtige Komponenten aufweist oder durch deren Zusatz nicht-flüchtig gemacht ist, ist die Kühlung nicht notwendig und ein mutmaßlich TNT-haltiger Luft- oder Trägergasstrom kann bis zu 150°C geheizt werden.

Die vorstehend beschriebenen Ausführungsformen können beliebig miteinander kombiniert werden. Nachfolgend werden die oben genannten Tabellen angeführt.

**Tabelle 1 Untersuchung des Einflusses des gewählten Lösungsmittels auf die relative Fluoreszenzintensität I/I₀ zur Messung von TNT (in 7.3 µL Chloroform, c = 220 µM) das einer TOAA Lösung in einem polaren Lösungsmittel (100 µL, c = 220 mM) zugesetzt wurde, nach 1 h bei Raumtemperatur und bei Raumtemperatur weiterverfolgt unter den nachfolgenden experimentellen Bedingungen: Anregungswellenlänge 425 nm, Spaltweite/ exc. 0.5 nm, Emissionswellenlänge 590 nm, Spaltweite 5.0 nm; Emissionsmaximum (λₑₘ); Absorptionsmaximum (λ_{abs}); relative Fluoreszenzintensität (I/I₀); ^{∗}nach 5 min UV Bestrahlung.**

| **Lösungsmittel** | **λₑₘ [nm]** | **λ_{abs} [nm]** | **I/I₀** | **λ_{abs}^{∗} [nm]** | **I/I₀^{∗}** |
|---|---|---|---|---|---|
| N -Methylformamid | 604 | 440 525 | 0,001 | 424 525 | 0,01 |
| N,N -Dimethylformamid | 585 | 380 508 527 645 | 0,08 | 380 429 508 527 645 | 0,56 |
| N,N -Diethylformamid | 577 | 380 508 530 645 | 0,18 | 380 426 508 530 645 | 1 |
| N,N -Dipropylformamid | 575 | 380 508 531 645 | 0,12 | 380 426 508 531 645 | 0,88 |
| N,N-Dibutylformamid | 576 | 380 509 532 649 | 0,07 | 368 380 427 509 532 649 | 0,48 |
| N-Formylpipiridien | 579 | 380 510 533 648 | 0,07 | 380 429 510 533 648 | 0,29 |
| Dimethylsulfoxid | 587 | 380 429 522 640 | 0,25 | 380 429 522 640 | 0,42 |
| Acetonitril | 585 | 380 522 640 | 0,15 | 380 426 510 640 | 0,17 |

**Tabelle 2 Screening der Parameter für UV-Bestrahlung und Anregung zur Messung von TNT (in 7,3 µL Chloroform, c = 220 µM) eingebracht in eine TOAA Lösung in DEF (100 µL, c = 220mM). Unmittelbar nach dem Ansetzen wurden die Reaktionsgemische für 5 Minuten mit UV-Licht bestrahlt. Wellenlänge des UV-Lichts (λ_{UV}); UV Bestrahlung Spaltbreite (UV irr.); Anregungsspalt bei 425 nm (exc.); relative Fluoreszenz-Intensität nach 5 min UV Bestrahlung (I/I₀^{∗}); Messgerät: FluoroMax^{(R)}-4 (Horiba Scientific)**

| **No.** | **λ_{UV} [nm]** | **UV irr. Spaltbreite [nm]** | **UV exc. Spaltbreite [nm]** | **I/I₀^{∗}** |
|---|---|---|---|---|
| 1 | 300 | 5 | 2 | 0,69 |
| 2 | 285 | 5 | 2 | 0,82 |
| 3 | 268 | 5 | 2 | 0,96 |
| 4 | 265 | 5 | 2 | 0,77 |
| 5 | 260 | 5 | 2 | 0,56 |
| 6 | 255 | 5 | 2 | 0,12 |
| 7 | 275 | 2,5 | 2 | 0,35 |
| 8 | 275 | 7,5 | 2 | 0,86 |
| 9 | 275 | 5 | 1 | 1 |
| 10 | 275 | 5 | 2 | 0,88 |

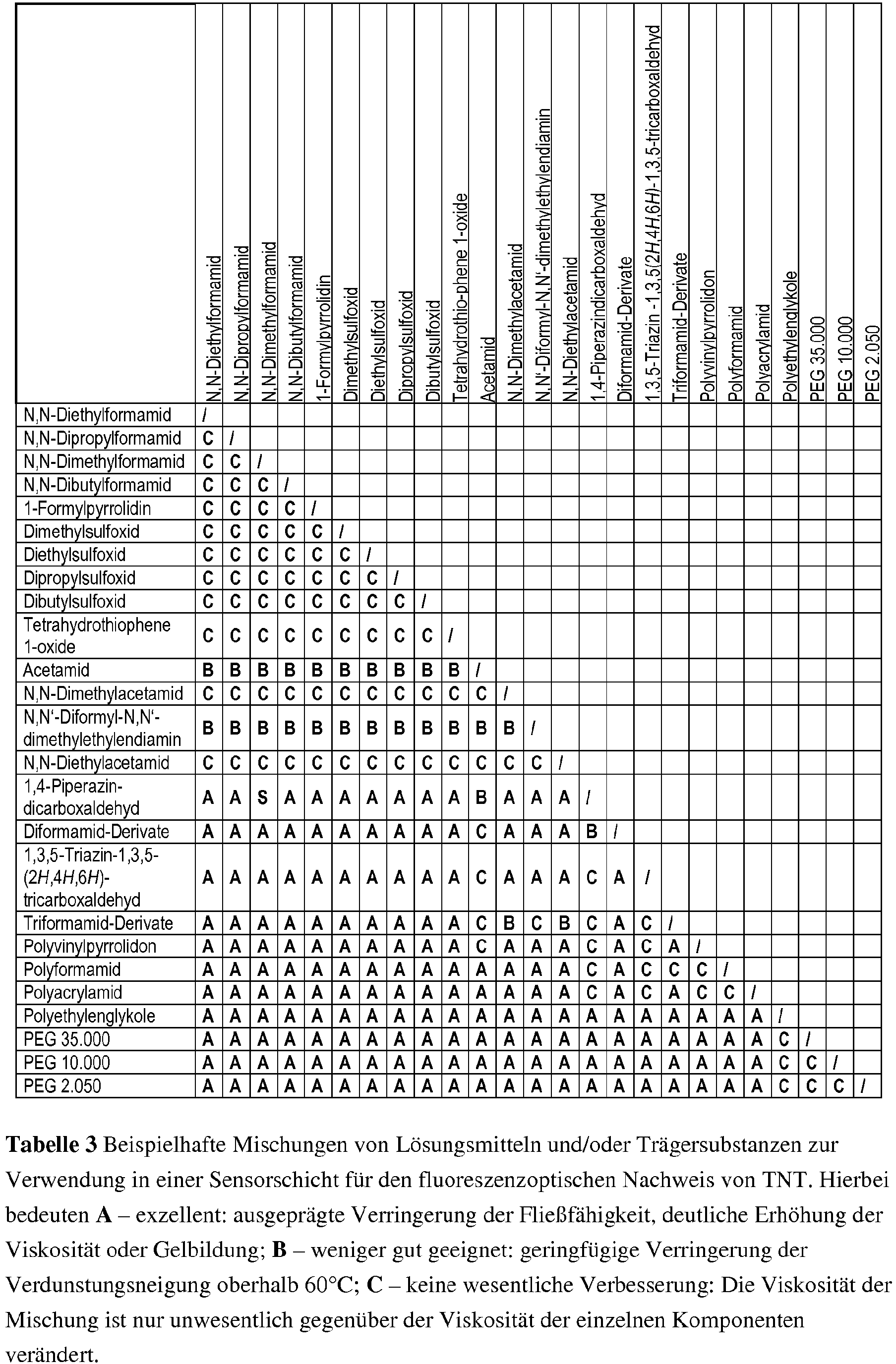

Vorbekannte Nachweistechniken für TNT weisen verschiedene Nachteile auf. So basieren die eingangs bezeichneten IMS-Verfahren auf einer radioaktiven Quelle und weisen oft ein nachteiliges Driftverhalten auf. GC-Techniken benötigen ein Trägergasreservoir. Chemische Sensoren haben demgegenüber zwar den Vorteil, dass sie prinzipiell sehr selektiv sind und Querempfindlichkeiten minimiert werden können, ihr Nachteil ist jedoch i.d.R. eine unzureichende Breitband-Detektion. An den ebenfalls zur Anwendung kommenden Raman-Verfahren ist nachteilig, dass Raman-Spektrometer häufig nicht batteriebetrieben, damit nicht mobil einsetzbar und anfällig gegen unspezifische Fluoreszenz sind. Laser-basierte Verfahren sind meist auch nicht batteriebetrieben und unterliegen häufig starken Matrixeffekten.

Die bestehenden Querempfindlichkeiten der derzeit als technologisch führend betrachteten fluoreszierenden Sensormaterialien für TNT können zu Fehlalarmen führen durch Wechselwirkung mit Stoffen mit einem hohen Oxidationspotential oder einer hohen Konzentration. Dies bewirkt, dass die Empfindlichkeit für den jeweiligen Explosivstoff abnimmt. Somit werden die Gesamtwirksamkeit bzw. die Marktakzeptanz der Verfahren beeinträchtigt. Aus diesem Grund ist das Einsatzgebiet der bisher entwickelten fluoreszenzbasierten Methoden zur Detektion von TNT stark eingeschränkt.

Was die kolorimetrischen Verfahren betrifft, so werden bei der Reaktion von Nitroaromaten mit Nukleophilen stark lichtabsorbierende Komplexe gebildet, die jedoch nur im hohen Konzentrationsbereich den kolorimetrischen Nachweis von TNT erlauben. Neben Änderungen der Absorptionseigenschaften in Abhängigkeit von den Umweltbedingungen zeigen die bis heute bekannten Methoden zur Detektion von TNT eine hohe Querempfindlichkeit gegenüber Mono-, Di- und Trinitroaromaten sowie auf Stoffe mit hohem Oxidationspotential oder mit hohen Stoffkonzentrationen.

Im Bereich der Umweltanalytik wird TNT im Feld mit mobilen Geräten, wie sie auch im Security-Bereich eingesetzt werden, nachgewiesen. Klassische umweltanalytische Verfahren sind laborgebunden, kosten- und zeitaufwendig und eignen sich nicht für den Vor-Ort-Einsatz. So wird TNT in Umweltproben nach Probenahme und Transport ins Labor i.d.R. nach Probenaufschluss und Aufreinigung mit klassischen HPLC-Verfahren nachgewiesen.

Demgegenüber ist das vorgeschlagene Verfahren zum schnellen, einfachen, verlässlichen, qualitativen und quantitativen Nachweis von 2,4,6-Trinitrotoluol (TNT) in der Luft, in Lösung und auf Oberflächen auch unmittelbar vor Ort geeignet. Voraussetzung ist lediglich das Vorhandensein einer UV-Lichtquelle. Zudem ist das Verfahren kostengünstig, da die vorgeschlagene Indikatorlösung keine teuren Reagenzien enthält. Die Indikatorlösung kann durch geeignete Zusätze vorteilhaft eingerichtet sein zur internen Referenzierung. Sie ist einfach herstellbar, haltbar und sogar mehrfach einsetzbar. Das Anion liegt im Überschuss vor. Wird nach der Messung keine Reaktion mit einem Analyten (z.B. TNT) beobachtet, so kann die Indikatorlösung wieder eingesetzt werden. Vor diesem Hintergrund eignet sich das vorgeschlagene Verfahren vorteilhaft für Langzeit- und Dauermessungen (Monitoring) in großen Hallen, in Militäreinrichtungen, in Wasserleitungen, in Bohrlöchern und im Grundwasser.

Überraschend erwies sich, dass eine UV-Exposition von TNT in Gegenwart bestimmter Anionen die Reaktion zu einem anionischen TNT-Sigma-Komplex katalysiert. Das hochspezifische Fluoreszenzsignal des anionischen Sigma-Komplexes von TNT ist zum Nachweis der Gegenwart des TNT geeignet. Grundlage des hier vorgeschlagenen spezifischen Nachweises von TNT ist somit die Bildung eines fluoreszierenden anionischen TNT-Sigma-Komplexes, der durch eine UV induzierte (Photo)reaktion mit nicht fluoreszierenden Anionen (vorzugsweise Acetat, Benzoat oder Phosphat) in polaren nicht fluoreszierenden Lösungsmitteln gebildet wird.

Im Gegensatz zu den bisher bekannten optischen Methoden kann mit der hier beschriebenen Methode TNT hochselektiv und sensitiv sogar in einer komplexen Mischung umfassend Mono-, Di- und Trinitroaromaten in der Luft, im Wasser und auf Oberflächen mit dem Einsatz der nicht fluoreszierenden Indikatorlösung durch die Bildung von fluoreszierenden anionischen Sigma-Komplexen detektiert werden.

Vorteilhaft ist die TNT-Indikatorlösung luft- und wasserstabil und unter unterschiedlichen klimatischen bzw. jahreszeitlichen Bedingungen sowohl bei Temperaturen um und unter dem Gefrierpunkt als auch bei bis zu 50°C Umgebungstemperatur einsetzbar. Eine Konzentration der Indikatorsubstanz (Anion + Kation) im Reaktionsansatz beträgt vorteilhaft 20 mM bis 220 mM. So kann die Konzentration einer Indikatorsubstanz umfassend Tetraoctylammoniumacetat (TOAA), also von Tetraoctylammonium-Kationen mit Acetat-Anionen im Bereich von 20 mM bis 220 mM liegen.

Das vorgeschlagene Nachweisverfahren kann vorteilhaft eine Anreicherung von TNT an einer hydrophoben Oberfläche vor der eigentlichen Analyse umfassen. Das Anreichern erfolgt durch Anströmen mit der kontaminierten Luft- oder Wasserprobe und Umsetzung von TNT-kontaminierten Oberflächen mit der nicht fluoreszierenden Indikatorlösung. Ebenso kann Material einer Wischprobe aufbereitet werden. Die (potentiell) kontaminierte Oberfläche wird, beispielsweise, mit einem Faserknäuel oder -bällchen oder einer (Aluminium-)Folie abgewischt. Der Analyt kann optional aus dem Wischmaterial in Lösung überführt werden. Anschließend wird die Lösung bzw. das Material einer UV-Bestrahlung (265-300nm) ausgesetzt und die Fluoreszenz der gebildeten Komplexe in der Reaktionsmischung bei einer Wellenlänge, beispielsweise von 425nm angeregt. Anschließend erfolgt ein Erfassen einer Fluoreszenzzunahme am Sensor und das Auslesen über ein Fluoreszenzlesegerät zur selektiven Detektion von TNT, beispielsweise bei 575nm.

Gemäß einem praktischen Ausführungsbeispiel wird die (mutmaßlich) mit TNT kontaminierte Probe (Luft bzw. das Wasser) über ein nicht fluoreszierendes, hydrophobes organisches Material oder in einen UV-durchlässigen Behälter im Messgerät geleitet. Die mit TNT angereicherte hydrophobe Fläche bzw. der mit dem Fluid gefüllte Behälter wird sodann mit der TNT-Indikatorlösung (0,5-50µL) versetzt. Bei der Photoreaktion von TNT mit der Indikatorlösung entstehen fluoreszierende anionische TNT-Sigma-Komplexe (Anregungsmaximum: 425nm, Emissionsmaximum: 575nm). Aufgrund der hohen Spezifität der UV-induzierten (Photo)reaktion zwischen TNT und der Indikatorlösung kann TNT in reiner Form oder in einer Mischung von sogar 10 verschiedenen Nitroaromaten eindeutig detektiert werden.

**Fig. 1** zeigt normierte Absorptions- und Fluoreszenzspektren von TNT (in 7.3 µL Chloroform, c = 0.22 mM) in einer TOAA/DEF Lösung (100 µL, c = 220 mM) vor (gestrichelt) und nach (durchgezogen und gepunktet) einer 5 Minuten dauernden UV Bestrahlung bei 275 nm. A steht für Absorption (relative Einheiten), F steht für Fluoreszenz (relative Einheiten), λ steht für die jeweilige Wellenlänge (nm).

Die Herausbildung des TNT-TOAA-Komplexes bewirkte die stärkste Fluoreszenzzunahme in DEF. Durch Bestrahlung einer TNT TOAA-Lösung in wasserfreiem DEF mit UV-Licht (275 nm) wurde eine Beschleunigung der Reaktion innerhalb von 5 Minuten festgestellt, die zu einer Abnahme der ausgeprägten Absorptionsbanden des Ladungstransfer-Komplexes und einer simultanen Verstärkung eines neuen Absorptionspeaks bei 426 nm und einer Fluoreszenzverstärkung (λₘₐₓ = 577 nm) führte (vgl. Fig. 1).

Die größte Fluoreszenz zeigen die Verbindungen im eingangs bezeichneten Emissionswellenlängenbereich (vgl. **Fig. 1**).

**Fig. 2** zeigt Fluoreszenzspektren der Reaktionsansätze mit TNT in TOAA/DEF ohne TNT (gepunktet) und mit TNT nach UV-Bestrahlung bei 275 nm für 5 min (durchgezogen) und für weitere 5 min (gestrichelt); Punkt-Strich: 5 min Bestrahlung bei 425 nm. Hierbei steht die Ordinatenbezeichnung F für die Fluoreszenzintensität.

Insbesondere zeigt **Fig. 2**, dass die Fluoreszenz des TNT/TOAA-Reaktionsansatzes in DEF bei weiterer UV-Bestrahlung (275nm) eine abnehmende Fluoreszenzintensität aufweist (gestrichelt). Diese Abnahme konnte dramatisch verstärkt werden, wenn im Absorptionsmaximum (bei 425nm) eine Bestrahlung (5 min) erfolgte, was darauf hinweist, dass die anionischen Sigma-Komplexe im Reaktionsansatz nicht photostabil sind (Punkt-Strich).

In allen anderen Indikatorlösungen beträgt die Konzentration ebenfalls 20-220 mM. Bei einer Indikatorlösungsmenge von 100 µL können 0,1-1000 µL TNT Lösungen in aprotischen organischen Lösungsmitteln und 0,1-20 µL TNT-Wasserproben eingesetzt bzw. nachgewiesen werden.

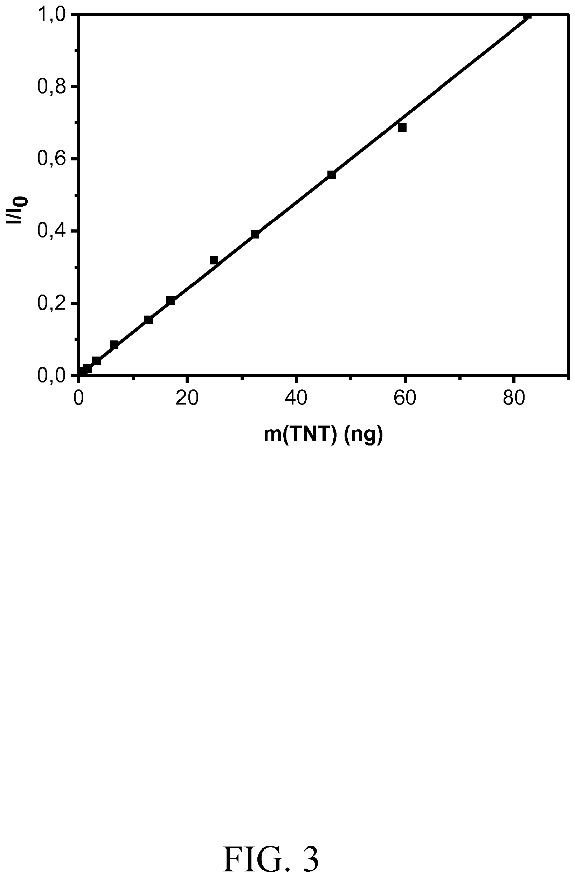

**Fig. 3** zeigt die relative Fluoreszenz-Intensität I/I₀ aufgetragen gegen die Menge TNT, die gelöst in einem Volumen von 7,3 µL Chloroform in eine TOAA/DEF-Lösung (100 µL, c = 55 mM) eingebracht wurde nach 5 Minuten UV-Bestrahlung bei 275 nm. Aus dem Verlauf der Kalibriergeraden ergibt sich für die hier beschriebenen Bedingungen die Möglichkeit, TNT bis zu einer absoluten Menge von 0,2 ng sicher nachzuweisen.

**Fig. 4** zeigt Absorptionsspektren des TNT-Reaktionsansatzes in TOAA/DEF ohne Bestrahlung (gepunktet), nach 25 min UV Bestrahlung bei 275 nm (durchgezogen) und des TNB-Reaktionsansatzes ohne UV-Bestrahlung in TOAA/DEF (gestrichelt).

Der Kern der Erfindung betrifft den hochselektiven und sensitiven Nachweis von TNT mit einer nicht fluoreszierenden Indikatorlösung, die in Gegenwart von TNT nach UV-Bestrahlung fluoreszierende anionische TNT-Sigma-Komplexe in der Reaktionsmischung ausbildet. Aufgrund der hohen Spezifität der Photoreaktion zwischen TNT und den Anionen in der polaren Lösung wird unter diesen Messbedingungen nur im Falle von TNT eine Fluoreszenzzunahme beobachtet. Daher ist eine Differenzierung von TNT von Mono-, Di- und anderen Trinitroaromaten sogar in einer komplexen Mischung möglich.

Vorteile des vorgeschlagenen Verfahrens und der Verwendung der beschriebenen Indikatorlösung ergeben sich insbesondere aus hoher Selektivität und Sensitivität. Weiter sind geringe Kosten kennzeichnend, da zusätzlich auf die komplexe Synthese von konjugierten Polymeren, Farbstoffen, Antikörpern etc. verzichtet werden kann. Das Verfahren ist leicht validierbar und auch von untrainiertem Personal zur hochselektiven und sensitiven Detektion von TNT einsetzbar. Es eignet sich zur Langzeitüberwachung von Militäranlagen, Langzeitüberwachung von Wasserleitungen, (Offshore), sowie zur Suche nach Altlasten, beispielsweise an Hand von Untersuchungen von Grundwasser.

Zusammenfassend wird vorgeschlagen ein Verfahren zum Nachweis eines Analyten umfassend 2,4,6-Trinitrotoluol. TNT kann gelöst in einem wässrigen oder organischen Lösungsmittel vorliegen. Das Verfahren umfasst: Bereitstellen einer Indikatorlösung. Die Indikatorlösung umfasst ein Kation, ein Anion und ein polares Lösungsmittel. Das Kation ist ausgewählt unter einem: Tetraalkylammonium-; Trialkylammonium-; und einem Dialkylammonium-Kation. Das Anion ist ausgewählt unter einem: Acetatanion; Propionat-Anion; Butyrat-Anion; Carboxylat-Anion mit einer Anzahl an Kohlenstoffatomen von 4 bis 15; Phosphatanion; Hydrogenphosphatanion; Dihydrogenphosphat-Anion; Benzoat-Anion; Phenolat-Anion; Phenylacetat-Anion; Cyanid-Anion; Fluorid-Anion; Carbonat-Anion; Hydrogencarbonat-Anion und einem Formiat-Anion. Das Verfahren umfasst weiter das Wechselwirken von Indikatorlösung und TNT, beispielsweise das Wechselwirken der Indikatorlösung und einer den Analyt enthaltenden Lösung sowie das nachfolgende photokatalytisch induzierte Ausbilden eines anionischen Sigma-Komplexes, der den Analyten und das Anion umfasst. Das Ausbilden des fluoreszierenden anionischen Sigma-Komplexes erfolgt durch Belichten der miteinander in Wechselwirkung getretenen (wechselwirkenden) Indikatorlösung und Analyt. Nun schließt sich das fluoreszenzoptisches Nachweisen des ausgebildeten anionischen Sigma-Komplexes an. Hiernach erfolgt optional ein Zuordnen eines bei Nachweis erfassten Fluoreszenzsignals zu einer Menge des Analyten oder zu einer Konzentration des Analyten. Bevorzugt erfolgt eine Zuordnung des Fluoreszenzsignals zu einer Konzentration des Analyten in einer Lösung. Diese Lösung kann beispielsweise ein Probenextrakt sein, wobei die extrahierte Probe z.B. eine Bodenprobe oder eine Wasserprobe sein kann.

Kurz zusammengefasst lässt sich die Erfindung wie folgt charakterisieren:
1. einfache Präparation der TNT-Indikatorlösung
2. UV-induzierte Photoreaktion von TNT mit Anionen
3. Nachweis von TNT mittels Fluoreszenzverstärkung
4. hochselektiver Nachweis von TNT
5. quantitativer Nachweis von TNT
6. empfindlicher Nachweis von TNT
7. selektiver Nachweis von TNT in einer komplexen Mischung aus Dinitro- und Trinitroaromaten
8. Nachweis von TNT in der Luft, in der Lösung und als Wischprobe
9. Möglichkeit der internen Referenzierung

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung gemäß den nachfolgenden Ansprüchen abzuweichen.

## Patentansprüche

1. Verfahren zum Nachweis eines Analyten umfassend 2,4,6- Trinitrotoluol, umfassend:
- Bereitstellen einer Indikatorlösung, umfassend ein Kation, ein Anion und ein polares Lösungsmittel,
- Wechselwirken der Indikatorlösung mit dem Analyten;
- photokatalytisch induziertes Ausbilden eines Komplexes umfassend den Analyten und das Anion durch UV-Belichten der mit dem Analyten in Wechselwirkung getretenen Indikatorlösung;
- fluoreszenzoptisches Nachweisen des ausgebildeten Komplexes; und
- optionales Zuordnen eines beim fluoreszenzoptischen Nachweisen erfassten Fluoreszenzsignals zu einer Menge oder zu einer Konzentration des Analyten,
wobei das Kation ausgewählt ist unter: einem Tetraalkylammonium-Kation; einem Trialkylammonium-Kation; und einem Dialkylammonium-Kation,
wobei das Anion ausgewählt ist unter einem:
Acetat-Anion;
Propionat-Anion;
Butyrat-Anion;
Carboxylat-Anion mit einer Anzahl an Kohlenstoffatomen von 4 bis 15;
Phosphat-Anion;
Hydrogenphosphat-Anion;
Dihydrogenphosphat-Anion;
Benzoat-Anion;
Phenyl acetat-Ani on;
Phenolat-Anion;
Cyanid-Anion;
Fluorid-Anion;
Carbonat-Anion;
Hydrogencarbonat-Anion; und einem
Formiat-Anion,
wobei die Indikatorlösung ein polares, nicht fluoreszierendes Lösungsmittel umfasst, und
wobei das UV-Belichten ein Exponieren der mit dem Analyten in Wechselwirkung getretenen Indikatorlösung in einem Wellenlängenbereich von 255-300 nm umfasst.

2. Verfahren nach Anspruch 1, wobei das Tetraalkylammonium-Kation ausgewählt ist unter einem Tetrabutylammonium-, Tetrahexylammonium-, und einem Tetraoctylammonium-Kation,
und das Anion ausgewählt ist unter einem Acetat-Anion, einem Benzoat-Anion und einem Phosphat-Anion.

3. Verfahren nach einem der Ansprüche 1 oder 2, wobei das polare, nicht fluoreszierende Lösungsmittel ausgewählt ist unter:
N,N-Diethylformamid, N,N-Dipropylformamid, N,N-Dimethylformamid, N,N-Dibutylformamid, 1-Formylpyrrolidin, Dimethylsulfoxid, Diethylsulfoxid, Dipropylsulfoxid, Dibutylsulfoxid, Tetrahydrothiophene 1-oxide, Acetamid, N,N-Dimethylacetamid, N,N'-Diformyl-N,N'-dimethylethylendiamin, N,N-Diethylacetamid, 1,4-Piperazindicarboxaldehyd, Diformamid-Derivaten, 1,3,5-Triazin-1,3,5(*2H,4H,6H*)-tricarboxaldehyd, Triformamid-Derivaten, einem Polyamid, einem Polyvinylpyrrolidon, einem Polyformamid, einem Polyacrylamid, einem Poly(N,N-dimethylacrylamid) und einem Polyethylenglykol, oder einer Mischung von zumindest zwei der genannten.

4. Verfahren nach einem der vorstehenden Ansprüche, wobei das fluoreszenzoptische Nachweisen ein Anregen einer Fluoreszenz des ausgebildeten Komplexes bei einer Anregungswellenlänge in einem Bereich von 400nm bis 500nm und ein Erfassen eines Betrags einer Fluoreszenz in einem Bereich von 550nm bis 700nm umfasst.

5. Verfahren nach Anspruch 4, wobei der Betrag der Fluoreszenz eine Fluoreszenzintensität und/oder eine Fluoreszenzquantenausbeute umfasst.

6. Verfahren nach Anspruch 4 oder 5, wobei
- der erfasste Betrag der Fluoreszenz einer bekannten Menge oder einer bekannten Konzentration des Analyten zugeordnet wird, sodass eine Kalibrierung des Verfahrens erfolgt; oder
- der erfasste Betrag der Fluoreszenz auf eine bekannte Konzentration des Analyten in einer Lösung zurückgeführt wird, sodass eine zumindest semiquantitative Bestimmung des Analyten in einer Probe mit einer unbekannten Konzentration des Analyten erfolgt, wobei die Lösung durch eine Extraktion der Probe gewonnen ist oder selbst die Probe ist.

7. Verfahren nach einem der vorstehenden Ansprüche, wobei eine Konzentration des Anions in der Indikatorlösung zwischen 20-220 mM, insbesondere zwischen 50-100 mM beträgt.

8. Verfahren nach einem der vorstehenden Ansprüche, wobei dem Wechselwirken der Indikatorlösung mit dem Analyten ein Anreichern des Analyten aus einer Probe an einem hydrophoben Trägermaterial vorausgeht.

9. Verfahren nach Anspruch 8, wobei das hydrophobe Trägermaterial ausgewählt ist unter:
einem Polybenzylmethacrylat, einem Polystyrol, einer hydrophobisierten Cellulose oder einem hydrophobierten Silicamaterial, beispielsweise einem chromatographischen Träger, sowie unter Teflon oder einem anderen hydrophoben Material, wobei es unerheblich ist, ob das Polybenzylmethacrylat, das Polystyrol, die hydrophobisierte Cellulose, das hydrophobierte Silicamaterial oder das andere hydrophobe Material mit oder ohne einen Quervernetzer vernetzt oder unvernetzt vorliegt.

10. Verfahren nach einem der vorstehenden Ansprüche wobei der Komplex, umfassend den Analyten und das Anion, ein fluoreszierender anionischer TNT-Sigma-Komplex ist.

11. Verwendung von UV-Licht in einem Wellenlängenbereich von 255-300 nm zur katalytischen Ausbildung eines anionischen Sigma-Komplexes, umfassend TNT und ein Anion, ausgewählt unter einem Acetat-Anion, einem Benzoat- Anion und einem Phosphat-Anion
wobei das UV-Licht zum Exponieren einer Indikatorlösung dient, die in Kontakt mit einer auf TNT zu untersuchenden Probe gebracht wird, und welche das Anion, ein Kationn, sowie ein polares, nicht fluoreszierendes Lösungsmittel umfasst, und
wobei das Kation ausgewählt ist unter: einem Tetraalkylammonium- Kation, umfassend ein Tetrabutylammonium-Kation, ein Tetrahexylammonium-Kation, oder ein Tetraoctylammonium-Kation; einem Trialkylammonium- Kation; und einem Dialkylammonium-Kation.

12. Verwendung eines anionischen Sigma-Komplexes, umfassend TNT und ein Anion, zum fluoreszenzoptischen Nachweis oder zur fluoreszenzoptischen Quantifizierung von TNT in einer Probe, insbesondere in einer Umweltprobe;
wobei der Sigma-Komplex photokatalytisch durch UV-Belichten einer mit einem Analyten in Wechselwirkung tretenden Indikatorlösung in einem Wellenlängenbereich von 255-300 nm ausgebildet wird;
wobei der Analyt 2,4,6-Trinitrotoluol umfasst;
wobei die Indikatorlösung ein Kation, ein Anion und ein polares, nicht fluoreszierendes Lösungsmittel umfasst;
wobei das Kation ausgewählt ist unter: einem Tetraalkylammonium-Kation; einem Trialkylammonium-Kation, und einem Dialkylammonium-Kation; und
wobei das Anion ausgewählt ist unter einem:
Acetat-Anion;
Propionat-Anion;
Butyrat-Anion;
Carboxylat-Anion mit einer Anzahl an Kohlenstoffatomen von 4 bis 15;
Phosphat-Anion;
Hydrogenphosphat-Anion;
Dihydrogenphosphat-Anion;
Benzoat- Anion;
Phenolat- Anion;
Phenylacetat- Anion;
Cyanid- Anion;
Fluorid- Anion;
Carbonat- Anion;
Hydrogencarbonat- Anion; und einem
Formiat-Anion.

13. Sensor zum fluoreszenzoptischen Nachweis von TNT in einem Fluid, umfassend eine auf einem Substrat angeordnete Sensorschicht, wobei die Sensorschicht eine Indikatorlösung, enthaltend ein Kation, ein Anion und zumindest ein polares, nicht fluoreszierendes Lösungsmittel umfasst, und so auf dem Substrat angeordnet ist, dass das mutmaßlich TNT enthaltende Fluid mit der Sensorschicht durch photokatalytisch induziertes Ausbilden eines Komplexes in eine Wechselwirkung treten kann und ein im Ergebnis dieser Wechselwirkung auftretendes Fluoreszenzsignal optisch erfassbar ist,
wobei das Kation ausgewählt ist unter: einem Tetraalkylammonium-Kation; einem Trialkylammonium-Kation; und einem Dialkylammonium-Kation,
wobei das Anion ausgewählt ist unter einem:
Acetat-Anion;
Propionat-Anion;
Butyrat-Anion;
Carboxylat-Anion mit einer Anzahl an Kohlenstoffatomen von 4 bis 15;
Phosphat-Anion;
Hydrogenphosphat-Anion;
Dihydrogenphosphat-Ani on;
Benzoat-Anion;
Phenyl acetat-Ani on;
Phenolat-Anion;
Cyanid-Anion;
Fluorid-Anion;
Carbonat-Anion;
Hydrogencarbonat-Anion; und einem
Formiat-Anion,
wobei das photokatalytisch induzierte Ausbilden des Komplexes ein Exponieren der mit dem Analyten in Wechselwirkung getretenen Indikatorlösung in einem Wellenlängenbereich von 255-300 nm umfasst.

14. Sensor nach Anspruch 13, wobei das Tetraalkylammonium-Kation ausgewählt ist unter einem Tetrabutylammonium-, Tetrahexylammonium-, und einem Tetraoctylammonium-Kation,
und das Anion ausgewählt ist unter einem Acetat-Anion, einem Benzoat-Anion und einem Phosphat-Anion.

15. Sensor nach zumindest einem der Ansprüche 13 oder 14, wobei das zumindest eine polare, nicht fluoreszierende Lösungsmittel ausgewählt ist unter:
N,N-Diethylformamid, N,N-Dipropylformamid, N,N-Dimethylformamid, N,N-Dibutylformamid, 1-Formylpyrrolidin, Dimethylsulfoxid, Diethylsulfoxid, Dipropylsulfoxid, Dibutylsulfoxid, Tetrahydrothiophene 1-oxide, Acetamid, N,N-Dimethylacetamid, N,N'-Diformyl-N,N'-dimethylethylendiamin, N,N-Diethylacetamid, 1,4-Piperazindicarboxaldehyd, Diformamid-Derivaten, 1,3,5-Triazin-1,3,5(*2H,4H,6H*)-tricarboxaldehyd, Triformamid-Derivaten, einem Polyamid, einem Polyvinylpyrrolidon, einem Polyformamid, einem Polyacrylamid, einem Poly(N,N-dimethylacrylamid) und einem Polyethylenglykol, oder einer Mischung von zumindest zwei der genannten.

## Claims

1. A method for detecting an analyte comprising 2,4,6-trinitrotoluene, comprising:
- providing an indicator solution, comprising a cation, an anion and a polar solvent;
- interacting the indicator solution with the analyte;
- photocatalytically induced forming of a complex, comprising the analyte and the anion, by means of UV exposure of the indicator solution interacting with the analyte;
- fluorescence optically detecting the formed complex; and
- optionally assigning a fluorescence signal recorded during the fluorescence optical detection to a quantity or to a concentration of the analyte,
the cation being selected from: a tetraalkylammonium cation, a trialkylammonium cation, and a dialkylammonium cation,
the anion being selected from:
an acetate anion;
a propionate anion;
a butyrate anion;
a carboxylate anion including a number of carbon atoms from 4 to 15;
a phosphate anion;
a hydrogen phosphate anion;
a dihydrogen phosphate anion;
a benzoate anion;
a phenylacetate anion;
a phenolate anion;
a cyanide anion;
a fluoride anion;
a carbonate anion;
a hydrogencarbonate anion; and
a formate anion,
the indicator solution comprising a polar, non-fluorescent solvent, and
the UV exposure comprising an exposure of the indicator solution interacting with the analyte in a wavelength range of 255 to 300 nm.

2. The method according to claim 1, wherein the tetraalkylammonium cation is selected from a tetrabutylammonium cation, a tetrahexylammonium cation, and a tetraoctylammonium cation, and
the anion is selected from an acetate anion, a benzoate anion, and a phosphate anion.

3. The method according to either claim 1 or 2, wherein the polar, non-fluorescent solvent is selected from:
N,N-diethylformamide, N,N-dipropylformamide, N,N-dimethylformamide, N,N-dibutylformamide, 1-formylpyrrolidine, dimethyl sulfoxide, diethyl sulfoxide, dipropyl sulfoxide, dibutyl sulfoxide, tetrahydrothiophene 1-oxide, acetamide, N,N-dimethylacetamide, N,N'-diformyl-N,N'-dimethylethylenediamine, N,N-diethylacetamide, 1,4-piperazine dicarboxaldehyde, diformamide derivatives, 1,3,5-triazine-1,3,5(2H,4H,6H)-tricarboxaldehyde, triformamide derivatives, a polyamide, a polyvinylpyrrolidone, a polyformamide, a polyacrylamide, a poly(N,N-dimethylacrylamide) and a polyethylene glycol, or a mixture of at least two of these.

4. The method according to any one of the preceding claims, wherein the fluorescence optical detection includes exciting a fluorescence of the formed complex at an excitation wavelength in a range of 400 nm to 500 nm, and recording a magnitude of a fluorescence in a range of 550 nm to 700 nm.

5. The method according to claim 4, wherein the magnitude of the fluorescence includes a fluorescence intensity and/or a fluorescence quantum yield.

6. The method according to claim 4 or 5, wherein
- the recorded magnitude of the fluorescence is assigned to a known quantity or a known concentration of the analyte, so that a calibration of the method takes place; or
- the recorded magnitude of the fluorescence is attributed to a known concentration of the analyte in a solution, so that an at least semi-quantitative determination of the analyte takes place in a sample having an unknown concentration of the analyte, wherein the solution is obtained by an extraction of the sample or is the sample itself.

7. The method according to any one of the preceding claims, wherein a concentration of the anion in the indicator solution is between 20 and 220 mM, and in particular between 50 and 100 mM.

8. The method according to any one of the preceding claims, wherein the interaction of the indicator solution with the analyte is preceded by an enrichment of the analyte from a sample on a hydrophobic carrier material.

9. The method according to claim 8, wherein the hydrophobic carrier material is selected from: a polybenzyl methacrylate, a polystyrene, a hydrophobized cellulose or a hydrophobized silica material, for example a chromatographic carrier, and Teflon or another hydrophobic material, it being immaterial whether the polybenzyl methacrylate, the polystyrene, the hydrophobized cellulose, the hydrophobized silica material or the other hydrophobic material is present in crosslinked or noncrosslinked form with or without a crosslinking agent.

10. The method according to any one of the preceding claims, wherein the complex, comprising the analyte and the anion, is a fluorescent anionic TNT sigma complex

11. Use of UV light in a wavelength range of 255 to 300 nm for the catalytic formation of an anionic sigma complex, comprising TNT and an anion, selected from an acetate anion, a benzoate anion and a phosphate anion,
the UV light being used to expose an indicator solution that is brought in contact with a sample to be tested for TNT and that comprises an anion, a cation, as well as a polar, non-fluorescent solvent, and
the cation being selected from: a tetraalkylammonium cation, comprising a tetrabutylammonium cation, a tetrahexylammonium cation or a tetraoctylammonium cation; a trialkylammonium cation; and a dialkylammonium cation.

12. Use of an anionic sigma complex, comprising TNT and an anion, for the fluorescence optical detection or for the fluorescence optical quantification of TNT in a sample, and in particular in an environmental sample,
the sigma complex being photocatalytically formed by the UV exposure of an indicator solution interacting with an analyte in a wavelength range of 255 to 300 mm,
the analyte comprising 2,4,6-trinitrotoluene,
the indicator solution comprising a cation, an anion, and a polar, non-fluorescent solvent,
the cation being selected from: a tetraalkylammonium cation, a trialkylammonium cation, and a dialkylammonium cation, and
the anion being selected from:
an acetate anion;
a propionate anion;
a butyrate anion;
a carboxylate anion including a number of carbon atoms from 4 to 15;
a phosphate anion;
a hydrogen phosphate anion;
a dihydrogen phosphate anion;
a benzoate anion;
a phenolate anion;
a phenylacetate anion;
a cyanide anion;
a fluoride anion;
a carbonate anion;
a hydrogencarbonate anion; and
a formate anion.

13. A sensor for the fluorescence optical detection of TNT in a fluid, comprising a sensor layer arranged on a substrate, wherein the sensor layer comprises an indicator solution containing a cation, an anion and at least one polar, non-fluorescent solvent, and is arranged on the substrate such that the fluid presumably containing TNT is able to interact with the sensor layer through the photocatalytically induced formation of a complex, and a fluorescence signal resulting from this interaction is optically measurable,
the cation being selected from: a tetraalkylammonium cation, a trialkylammonium cation, and a dialkylammonium cation,
the anion being selected from:
an acetate anion;
a propionate anion;
a butyrate anion;
a carboxylate anion including a number of carbon atoms from 4 to 15;
a phosphate anion;
a hydrogen phosphate anion;
a dihydrogen phosphate anion;
a benzoate anion;
a phenylacetate anion;
a phenolate anion;
a cyanide anion;
a fluoride anion;
a carbonate anion;
a hydrogencarbonate anion; and
a formate anion,
the photocatalytically induced formation of the complex comprising an exposure of the indicator solution interacting with the analyte in a wavelength range of 255 to 300 nm.

14. The sensor according to claim 13, wherein the tetraalkylammonium cation is selected from a tetrabutylammonium cation, a tetrahexylammonium cation, and a tetraoctylammonium cation, and
the anion is selected from an acetate anion, a benzoate anion, and a phosphate anion.

15. The sensor according to either claim 13 or 14, wherein the at least one polar, non-fluorescent solvent is selected from:
N,N-diethylformamide, N,N-dipropylformamide, N,N-dimethylformamide, N,N-dibutylformamide, 1-formylpyrrolidine, dimethyl sulfoxide, diethyl sulfoxide, dipropyl sulfoxide, dibutyl sulfoxide, tetrahydrothiophene 1-oxide, acetamide, N,N-dimethylacetamide, N,N'-diformyl-N,N'-dimethylethylenediamine, N,N-diethylacetamide, 1,4-piperazine dicarboxaldehyde, diformamide derivatives, 1,3,5-triazine-1,3,5(2H,4H,6H)-tricarboxaldehyde, triformamide derivatives, a polyamide, a polyvinylpyrrolidone, a polyformamide, a polyacrylamide, a poly(N,N-dimethylacrylamide) and a polyethylene glycol, or a mixture of at least two of these.

## Revendications

1. Procédé de détection d'un analyte comprenant du 2,4,6-trinitrotoluène, comprenant :
- une fourniture d'une solution indicatrice comprenant un cation, un anion et un solvant polaire,
- une interaction de la solution indicatrice avec l'analyte ;
- une formation induite par photocatalyse d'un complexe comprenant l'analyte et l'anion par exposition UV de la solution indicatrice interagissant avec l'analyte ;
- une détection par fluorescence du complexe formé ; et
- une association optionnelle d'un signal de fluorescence détecté lors de la détection par fluorescence à une quantité ou une concentration de l'analyte, dans lequel le cation est sélectionné parmi : un cation tétraalkylammonium ; un cation trialkylammonium ; et un cation dialkylammonium,
dans lequel l'anion est sélectionné parmi :
anion acétate ;
anion propionate ;
anion butyrate ;
anion carboxylate avec un nombre d'atomes de carbone de 4 à 15 ;
anion phosphate ;
anion hydrogénophosphate ;
anion dihydrogénophosphate ;
anion benzoate ;
anion phénylacétate ;
anion phénolate ;
anion cyanure ;
anion fluorure ;
anion carbonate ;
anion hydrogénocarbonate ; et
anion formiate,
dans lequel la solution indicatrice comprend un solvant polaire non fluorescent et
dans lequel l'exposition UV comprend une exposition de la solution indicatrice interagissant avec l'analyte à un domaine de longueurs d'ondes de 255 à 300 nm.

2. Procédé selon la revendication 1, dans lequel le cation tétraalkylammonium est sélectionné parmi un cation tétrabutylammonium, un cation tétrahexylammonium et un cation tétraactylammonium,
et l'anion est sélectionné parmi un anion acétate, un anion benzoate et un anion phosphate.

3. Procédé selon l'une des revendications 1 ou 2, dans lequel le solvant polaire non fluorescent est sélectionné parmi :
N,N-diéthylformamide, N,N-diproylformamide, N,N-diméthylformamide, N,N-dibutylformamide, 1-formylpyrrolidine, diméthylsulfoxyde, diéthylsulfoxyde, dipropylsulfoxyde, dibutylsulfoxyde, tétrahydrothiophène 1-oxyde, acétamide, N,N-diméthylacétamide, N,N'-diformyl-N,N'-diméthyléthylènediamine, N,N-diéthylacétamide, I,4-pipérazinedicarboxaldéhyde, dérivés de diformamide, 1,3,5-triazine-1,3,5 (2H, 4H, 6H)-tricarboxaldéhyde, dérivés de triformamide, un polyamide, un polyvinylpyrrolidone, un polyformamide, un polyacrylamide, un poly(N,N-diméthylacrylamide) et un polyéthylène glycol, ou un mélange d'au moins deux de ceux-ci.

4. Procédé selon l'une des revendications précédentes, dans lequel la détection par fluorescence comprend une excitation d'une fluorescence du complexe formé avec une longueur d'onde d'excitation dans un domaine de 400 nm à 500 nm et une mesure d'une valeur de fluorescence dans un domaine de 550 nm à 700 nm.

5. Procédé selon la revendication 4, dans lequel la valeur de la fluorescence comprend une intensité de la fluorescence et/ou un rendement quantique de la fluorescence.

6. Procédé selon la revendication 4 ou 5, dans lequel
- la valeur mesurée de la fluorescence est mise en correspondance avec une quantité connue ou une concentration connue de l'analyte, de façon à réaliser un étalonnage du procédé ; ou
- la valeur mesurée de la fluorescence est ramenée à une concentration connue de l'analyte dans une solution, de façon à réaliser une détermination au moins semi-quantitative de l'analyte dans un échantillon avec une concentration inconnue de l'analyte, dans lequel la solution est obtenue par une extraction de l'échantillon ou est elle-même l'échantillon.

7. Procédé selon l'une des revendications précédentes, dans lequel une concentration de l'anion dans la solution indicatrice est entre 20 et 220 mM, plus particulièrement entre 50 et 100 mM.

8. Procédé selon l'une des revendications précédentes, dans lequel l'interaction de la solution indicatrice avec l'analyte est précédée d'un enrichissement de l'analyte provenant d'un échantillon avec un matériau de substrat hydrophobe.

9. Procédé selon la revendication 8, dans lequel le matériau de substrat hydrophobe est sélectionné parmi : un polybenzylméthacrylate, un polystyrène, une cellulose hydrophobisée ou un matériau de type silice hydrophobisée, par exemple un substrat chromatographique, ainsi que parmi le téflon ou un autre matériau hydrophobe, dans lequel il n'est pas important que le polybenzylméthacrylate, le polystyrène, la cellulose hydrophobisée, le matériau de type silice hydrophobisée ou l'autre matériau hydrophobe existe de manière réticulée ou non réticulée avec un agent de réticulation croisée.

10. Procédé selon l'une des revendications précédentes, dans lequel le complexe comprenant l'analyte et l'anion est un complexe de TNT sigma anionique fluorescent.

11. Utilisation d'une lumière UV dans un domaine de longueurs d'ondes de 255 à 300 nm pour la formation catalytique d'un complexe sigma anionique, comprenant le TNT et un anion, sélectionné par un anion acétate, un anion benzoate et un anion phosphate,
dans lequel la lumière UV permet l'exposition d'une solution indicatrice qui est mise en contact avec un échantillon à examiner en ce qui concerne le TNT et qui comprend l'anion, un cation, ainsi qu'un solvant polaire non fluorescent et
dans lequel le cation est sélectionné parmi : un cation tétraalkyammonium, comprenant un cation tétrabutylammonium, un cation tétrahexylammonium ou un cation tétraactylammonium ; un cation trialkylammonium ; et un cation dialkylammonium.

12. Utilisation d'un complexe sigma anionique, comprenant du TNT et un anion, pour la détection par fluorescence ou pour la quantification de la fluorescence du TNT dans un échantillon, plus particulièrement dans un échantillon environnemental ;
dans lequel le complexe sigma est formé par photocatalyse par éclairage UV d'une solution indicatrice en interaction avec un analyte dans un domaine de longueurs d'ondes de 255 à 300 nm ;
dans lequel l'analyte comprend du 2,4,6-trinitrotoluène ;
dans lequel la solution indicatrice comprend un cation, un anion et un solvant polaire non fluorescent ;
dans lequel le cation est sélectionné parmi : un cation tétraalkyammonium, un cation trialkylammonium et un cation dialkylammonium ; et
dans lequel l'anion est sélectionné parmi :
anion acétate ;
anion propionate ;
anion butyrate ;
anion carboxylate avec un nombre d'atomes de carbone de 4 à 15 ;
anion phosphate ;
anion hydrogénophosphate ;
anion dihydrogénophosphate ;
anion benzoate ;
anion phénylacétate ;
anion phénolate ;
anion cyanure ;
anion fluorure ;
anion carbonate ;
anion hydrogénocarbonate ; et
anion formiate.

13. Capteur pour détection par fluorescence du TNT dans un fluide, comprenant une couche de capteur disposée sur un substrat, dans lequel la couche de capteur comprend une solution indicatrice contenant un cation, un anion et au moins un solvant polaire non fluorescent, et est disposée sur le substrat de façon à ce que le fluide contenant potentiellement le TNT puisse être en interaction avec la couche de capteur par la formation, induite par photocatalyse, d'un complexe et qu'un signal de fluorescence générée par cette interaction soit mesurable optiquement,
dans lequel le cation est sélectionné parmi : un cation tétraalkyammonium, un cation trialkylammonium et un cation dialkylammonium,
dans lequel l'anion est sélectionné parmi :
anion acétate ;
anion propionate ;
anion butyrate ;
anion carboxylate avec un nombre d'atomes de carbone de 4 à 15 ;
anion phosphate ;
anion hydrogénophosphate ;
anion dihydrogénophosphate ;
anion benzoate ;
anion phénylacétate ;
anion phénolate ;
anion cyanure ;
anion fluorure ;
anion carbonate ;
anion hydrogénocarbonate ; et
anion formiate
dans lequel la formation, induite par photocatalyse, du complexe, comprend une exposition de la solution indicatrice en interaction avec l'analyte dans un domaine de longueurs d'ondes de 255 à 300 nm.

14. Capteur selon la revendication 13, dans lequel le cation tétraalkylammonium est sélectionné parmi : un cation tétrabutylammonium, un cation tétrahexylammonium ou un cation tétraoctylammonium ;
et l'anion est sélectionné parmi un anion acétate, un anion benzoate et un anion phosphate.

15. Capteur selon l'une des revendications 13 ou 14, dans lequel l'au moins un solvant polaire non fluorescent est sélectionné parmi :
N,N-diéthylformamide, N,N-diproylformamide, N,N-diméthylformamide, N,N-dibutylformamide, 1-formylpyrrolidine, diméthylsulfoxyde, diéthylsulfoxyde, dipropylsulfoxyde, dibutylsulfoxyde, tétrahydrothiophène 1-oxyde, acétamide, N,N-diméthylacétamide, N,N'-diformyl-N,N'-diméthyléthylènediamine, N,N-diéthylacétamide, I,4-pipérazinedicarboxaldéhyde, dérivés de diformamide, 1,3,5-triazine-1,3,5 (2H, 4H, 6H)-tricarboxaldéhyde, dérivés de triformamide, un polyamide, un polyvinylpyrrolidone, un polyformamide, un polyacrylamide, un poly(N,N-diméthylacrylamide) et un polyéthylène glycol, ou un mélange d'au moins deux de ceux-ci.
